# EUROPÄISCHE PATENTSCHRIFT

(11) **EP 2 193 152 B1**
(45) Veröffentlichungstag und Bekanntmachung des Hinweises auf die Patenterteilung: **03.08.2011**
(21) Anmeldenummer: 08802307.2
(22) Anmeldetag: 18.09.2008
(51) Int. Cl.: C08F 220/28

(54) **POLYCARBOXYLATETHER ALS DISPERGIERMITTEL FÜR ANORGANISCHE PIGMENTFORMULIERUNGEN**
POLYCARBOXYLATE ETHER AS A DISPERSING AGENT FOR INORGANIC PIGMENT FORMULATIONS
ÉTHER POLYCARBOXYLÉ UTILISÉ COMME AGENT DISPERSANT POUR FORMULATIONS PIGMENTAIRES INORGANIQUES

(30) Priorität: 21.09.2007 DE 102007045230
(43) Veröffentlichungstag der Anmeldung: 09.06.2010
(73) Patentinhaber: Clariant Finance (BVI) Limited, Road Town, Tortola (VG)
(72) Erfinder: AHRENS, Hendrik, 65830 Kriftel (DE); SCHAEFER, Carsten, 84453 Mühldorf (DE)
(74) Vertreter: Mikulecky, Klaus
(86) Internationale Anmeldenummer: PCT/EP2008/007783
(87) Internationale Veröffentlichungsnummer: WO 2009/040042

(56) Entgegenhaltungen:
- EP-A1- 0 011 806
- EP-A1- 1 078 946
- EP-A2- 1 167 452
- WO-A1-01/40338
- WO-A1-2007/090759
- WO-A2-02/066528
- US-A- 5 919 988

## Beschreibung

Polycarboxylatether als Dispergiermittel für anorganische Pigmentformulierungen

Gegenstand der vorliegenden Erfindung sind Polycarboxylatether sowie deren Herstellung und Verwendung als Dispergiermittel für anorganische Pigmentsuspensionen, Plastifizier- und Fliessmittel für hydraulische Zementsysteme, Beton, Mörtel, Gipssuspensionen und Gipsanhydritbindemittelformulierungen, für keramische Massen aus Tonen, Kaolinen, Feldspäten und Quarzgestein und für Pigmentpräparationen von anorganischen Weiß- und Buntpigmenten in der Farben- und Lackindustrie, Lederindustrie und als Kalksteinverhinderer, Dispergier- und Sequestriermittel in der Wasch- und Reinigungsmittelindustrie und die Wasseraufbereitung.

Feststoffsuspensionen enthalten üblicherweise zur Verflüssigung und Dispergierung der anorganischen Feststoffe Dispergier- oder Fließmittel. Derartige Feststoffe können Zement, Gips, Gipshalbhydrat, Flugasche, Kaolin in der Bauindustrie, Titandioxid, Calciumcarbonat, Talkum, Bariumsulfat, Zinksulfit, Bismutvanadat, Eisenoxidpigmente, Chromdioxid, Cobaltspinellpigmente und andere anorganische Buntpigmente in der Farben und Lackindustrie sein. Auch keramischen Massen von Tonen, Kaolinen, Feldspäten und Quarzgestein werden Dispergiermittel zusammen mit Soda und/oder Wasserglas zugesetzt, um die Verarbeitbarkeit zu ermöglichen und den Grünling in die Gipsform zu pressen.

Zum Dispergieren von Kaolin, Titandioxid und Calciumcarbonat werden üblicherweise niedrigmolekulare Polymerisate aus Acrylsäure oder Copolymere aus Acrylsäure und Maleinsäure und deren Natrium, Kalium oder Ammoniumsalze eingesetzt.

In der Bauindustrie werden üblicherweise zum Verflüssigen der Betone für die Fertigung von Bodenbelägen, Betonsteinen, für Transportbeton und Leichtbeton Fliessmittel verwendet.

Natriumligninsulfonat ist ein übliches Fliessmittel für Zement in hydraulisch bindenden Baustoffzusammensetzungen und für Gipshalbhydrat in Putzen, Mauermörtellmassen, Gipslatten und für Anhydritestriche.

DE-A-1238831 beschreibt ein Dispergiermittel für Zement, das durch Kondensation von Naphthalinsulfonsäurederivaten und Formaldehyd hergestellt wird.

DE-A-1671017 beschreibt die Verwendung von sulfongruppenhaltigen Melaminharzen als Fliessmittel für Beton.

DE-A-2948698 beschreibt hydraulische Mörtel für Estriche, die Fliessmittel auf Basis von Melamin-Formaldehyd-Kondensationsprodukten und/oder sulfonierte Formaldehyd-Naphthalinkondensate und/oder Ligninsulfonat und als Binder zusammen gemahlener Portlandzement, tonhaltiger Kalkmergel, Ton- und Schwachbrandlinker enthalten.

DE-A-3530258 beschreibt die Verwendung von wasserlöslichen Natriumnaphthalinsulfonsäure - Formaldehydkondensaten als Zusatzmittel für anorganische Bindemittel und Baustoffe. Diese Zusatzmittel werden zur Verbesserung der Fliessfähigkeit der Bindemittel wie z. B. Zement, Anhydrit oder Gips sowie den damit hergestellten Baustoffen beschrieben.

Neben den rein anionischen Dispergiermitteln, die im Wesentlichen Carbonsäureund Sulfonsäuregruppen enthalten, werden schwach anionische Kammpolymere beschrieben, die üblicherweise anionische Ladungen an der Hauptkette tragen und nichtionische Polyalkylenglykolseitenketten enthalten.

WO-01/96007 beschreibt diese schwach anionischen Dispergier- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten. DE-A-19513126 und DE-A-19834173 beschreiben Copolymere auf Basis von ungesättigten Dicarbonsäurederivaten und Oxyalkylenglykol-Alkenylethern und deren Verwendung als Zusatzmittel für hydraulische Bindemittel, insbesondere Zement.

DE-A-10017667 beschreibt die Verwendung von ähnlicher Copolymeren mit vinylfunktionalisierten Polyethern zur Herstellung wässriger Pigmentpräparationen. Diese Copolymere werden durch radikalische Polymerisation von u. a. Vinylpolyalkylenlgykolether und Maleinsäureanhydrid und weiteren Monomeren hergestellt und eignen sich zum Dispergieren von organischen und anorganischen Pigmenten, Füllstoffen und zur Herstellung von Pigmentkonzentraten, -pasten und -präparationen.

Ziel der Zugabe von Fliessmitteln in der Bauindustrie ist entweder die Plastizität des Betons zu erhöhen oder die benötigte Wassermenge für das Gemisch aus Zementleim, Flugasche und Zuschlagstoffen bei gleichen Verarbeitungsbedingung zu reduzieren.

WO-99/010407 offenbart ein Verfahren zur Herstellung von Copolymeren aus alkoxylierter (Meth)Acrylsäure und ethylenisch ungesättigten Carbonsäuren.

EP-A-1 197 536 offenbart Propfcopolymere, die als Pigmentdispergator verwendbar sind. Sie bestehen aus einer hydrophoben Hauptkette, auf die alkoxylierte (Meth)Acrylsäure aufgepfropft wird.

EP-A-0 311 157 offenbart Copolymere aus alkoxylierter (Meth)Acrylsäure, (Meth)Acrylsäure und Styrolderivaten, die als Dispergator verwendbar sind.

Es hat sich gezeigt, dass Fliessmittel auf Basis von Ligninsulfonat, Melaminsulfonat und Polynaphthalinsulfonat den schwach anionischen, polyalkylenglykoletherhaltigen Copolymeren in ihrer Wirksamkeit unterlegen sind. Diese Copolymere werden in der Bauindustrie auch als Polycarboxylatether (PCE) bezeichnet. Die Informationsbroschüre "Modern Superplasticisers in Concrete Technology, Januar 2007" des Vereins Deutsche Bauchemie e.V., Frankfurt am Main beschreibt die Verwendung und die Vorteile dieser Polycarboxylatether.

Polycarboxylatether dispergieren die anorganischen Pigmentpartikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenglykoletherseitenketten, die durch Absorption von Wassermolekülen eine stabilisierende Schutzschicht um das Pigmentpartikel bilden.

Dadurch kann entweder die benötige Menge Wasser für das Einstellen einer bestimmten Konsistenz gegenüber den klassischen Fliessmitteln reduziert werden oder aber die Plastizität der feuchten Baustoffmischung wird durch die Zugabe der Polycarboxylatether so weit reduziert, dass selbstverdichtender Beton bei niedrigen Wasser/Zement - Verhältnissen hergestellt werden kann. Auch ermöglicht die Verwendung der Polycarboxylatether die Herstellung von Transportbeton, der über längere Zeiträume pumpbar bleibt oder die Herstellung von hochfesten Betonen durch die Einstellung eines niedrigen Wasser/Zement - Verhältnisses.

Es ist daher nicht verwunderlich, dass die Industrie weiterhin auf der Suche nach geeigneten Polymeren ist, die sich für den Einsatz als Betonverflüssiger und Dispergiermittel für anorganische Pigmente eignen.

WO-02/066528 beschreibt ein solches Dispergiermittel, dass sich als wasserreduzierendes Hilfsmittel für Beton eignet. Insbesondere werden für die Herstellung des Dispergiermittels Macromonomere eingesetzt, die durch Alkoxylierung von Hydroxyalkylacrylaten und -methacrylaten in Gegenwart von DMC (double metal cyanide) - Katalysatoren verfügbar sind.

US 5777177 und US 5854386 beschreiben die Verwendung von

DMC - Katalysatoren für die Alkoxylierung von Startmolekülen.

Aufgabe vorliegender Erfindung war es demzufolge, verbesserte Polymere aufzufinden, die sich für den Einsatz als Betonverflüssiger und Dispergiermittel für anorganische Pigmente eignen.

Gegenstand der Erfindung ist die Verwendung von mit DMC - Katalysatoren hergestellten Macromonomeren für die Herstellung von Polycarboxylatethern, erhältlich durch Polymerisation der Monomere (A), (B) und (C), wobei
(A) ein Monomer der Formel (I) 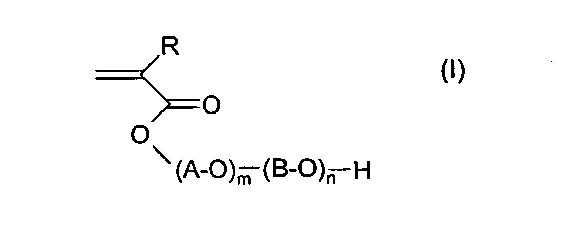 worin
   - A: für C₂- bis C₄-Alkylen,
   - B: für ein von A verschiedenes C₂- bis C₄-Alkylen,
   - R: für Wasserstoff oder Methyl,
   - m: für eine Zahl von 1 bis 500,
   - n: für eine Zahl von 1 bis 500 stehen,
(B) ein ethylenisch ungesättigtes Monomer ist, das mindestens eine Carbonsäurefunktion enthält,
(C) ein weiteres, von (A) und (B) verschiedenes, wasserlösliches, ethylenisch ungesättigtes Monomer ist.

Der Gewichtsanteil der Monomere beträgt bevorzugt 35 bis 99 % für das Macromonomer (A), 0,5 bis 45 % für das Monomer (B), und 0,5 bis 20 % für das Monomer (C).

Die Alkylenoxideinheiten (A-O)ₘ und (B-O)ₙ können entweder statistisch oder, wie im Falle einer bevorzugten Ausführungsform, blockartig angeordnet vorliegen. In einer bevorzugten Ausführungsform steht (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, wobei der molare Anteil der Ethylenoxid-Einheiten bevorzugt 50 bis 99 %, insbesondere 60 bis 99 %, besonders bevorzugt 70 bis 99 %, bezogen auf die Summe (100 %) der Ethylenoxid- und Propylenoxid-Einheiten, beträgt.

m ist vorzugsweise eine Zahl von 1 bis 150, insbesondere 2 bis 10. n ist vorzugsweise eine Zahl von 3 bis 300, insbesondere 5 bis 150. Die Summe der Alkylenoxideinheiten n + m liegt bevorzugt zwischen 2 und 500, besonders bevorzugt zwischen 10 und 150.

Die erfindungsgemäße Herstellung der Macromonomeren (A) geschieht durch Umsetzung von konjugierten ungesättigten Säuren oder reaktiven Derivaten wie konjugierten ungesättigten Hydroxyalkylestern mit Alkylenoxiden in Gegenwart von so genannten DMC-Katalysatoren (Doppel-Metal-Cyanid-Katalysatoren). Diese Katalysatoren haben zum Beispiel die allgemeinen Formel Zn₃[Co(CN)₆]₂•xZnCl₂•yH₂O•z Glyme mit x = 0,2 bis 3, y = 1 bis 10 und z = 0,5 bis 10, wie in EP-B-0 555 053 offenbart. Geeignete DMC-Katalysatoren sind in der Literatur auch mit anderen Komplexliganden bekannt. Ihre Herstellung und Zusammensetzung wird unter anderem in EP-A-1 244 519, EP-A-0 761 708, EP-A-0 654 302 und EP-A-1 276 563 beschrieben. Insbesondere sind die in Beispiel 2 von EP-A-1 276 563 beschriebenen DMC Katalysatoren geeignet.

Zu den Monomeren (B) gehören insbesondere monoethylenisch ungesättigte Monomere. Beispiele hierfür sind monoethylenisch ungesättigte Mono- und Dicarbonsäuren mit 3 bis 8 C-Atomen wie Acrylsäure, Methacrylsäure, Crotonsäure, Isocrotonsäure, Maleinsäure und Fumarsäure.

Zu den Monomeren (C) gehören monoethylenisch ungesättigte Sulfonsäuren und Phosphonsäuren und deren Salze, insbesondere deren Alkalimetallsalze wie Vinylsulfonsäure, Allylsulfonsäure, Methallylsulfonsäure, Styrolsulfonsäue, 2-Acryloxyethansulfonsäure, 2-Acrylamido-2-methylpropansulfonsäure, Vinylphosphonsäure, Allylphosphonsäure, 2-Acryloxyethanphosphonsäure und 2-Acrylamido-2-methylpropanphosphonsäure. Des Weiteren gehören zu den Monomeren (C) Monoallylpolyalkylenglykole. Monomer (C) ist wasserlöslich.

Das erfindungsgemäße Copolymer kann übliche endständige Gruppen besitzen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.

Die erfindungsgemäßen Polycarboxylatether besitzen vorzugsweise ein Molekulargewicht von 10³ g/mol bis 10⁹ g/mol.

Eine wesentliche Eigenschaft, die die erfindungsgemäßen Polycarboxylatether auszeichnet, ist, dass es sich bei den Polyalkylenglykol-Seitenketten des Polymers nicht um reine Polyethylenglykole oder Polypropylenglykole handelt. Stattdessen sind die Polyalkylenglykole entweder statistische oder blockartige Polyalkylenglykole aus Propylenoxid- und Ethylenoxid-Einheiten.

Die Herstellung der erfindungsgemäßen Polycarboxylatether kann mittels radikalischer Polymerisation erfolgen. Die Polymerisationsreaktion kann kontinuierlich, diskontinuierlich oder semi-kontinuierlich durchgeführt werden.

Der erfindungsgemäße Polycarboxylatether ist ein Hauptkettenpolymer, und kein Pfropfprodukt.

Die Herstellung der erfindungsgemäßen Polycarboxylatether wird erst möglich durch die Verwendung von Polyalkylenglykolmonomethacrylsäureestern als Monomere (A), die durch die DMC-Katalyse hergestellt werden. Monomere (A), die durch andere Verfahren hergestellt wurden, besitzen zu hohe Gehalte an Dimethacrylsäureester des Polyalkylenglykols. Diese Dimethacrylate führen bei der Polymerisation zu vernetzten Polymerstrukturen, die aufgrund ihrer hohen Viskosität nicht in den nachfolgend beschriebenen Verwendungsgebieten eingesetzt werden können.

Beispiele 6 und 7 zeigen, dass der Einsatz von Monomeren (A), die nicht mittels DMC-Katalyse hergestellt wurden, zu unbrauchbaren Polycarboxylatethern führt.

Die Polymerisationsreaktion wird bevorzugt als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, i-Propanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykol-monoalkylether und -dialkylether verwendet werden. Ebenso können aromatische Lösungsmittel wie z. B. Toluol, Xylol oder höher siedende Alkylbenzole eingesetzt werden. Ebenfalls ist der Einsatz von Lösungsmittelgemischen denkbar, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂ gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat, 2-Mercaptoethanol, 2-Mercaptopropionsäure, 3-Mercaptopropionsäure und einige Halogenverbindungen, wie z. B. Tetrachlorkohlenstoff, Chloroform und Methylenchlorid.

Die erfindungsgemäßen Polycarboxylatether werden bevorzugt als 5-50 %ige wässrige Lösung und besonders bevorzugt als 20 bis 45 %ige wässrige Lösung als Dispergier-, Fliess-, Sequestrier- oder Plastifiziermittel für den Bestimmungszweck dargereicht.

Eine weitere Darreichungsform der erfindungsgemäßen Polycarboxylatether sind Pulver oder Granulate, die durch Trocknen der nach der Polymerisation erhältlichen Lösungen der Polycarboxylatether hergestellt werden.

Die erfindungsgemäßen Polycarboxylatether eignen sich als Dispergier- und Fliessmittel für Mineralien, anorganische Pigmente, als Dispergiermittel für Pigmentpräparationen, Abtönpasten für Wandfarben, Drucktinten, Dispergiermittel für Pigmentdispersionen z. B. Titandioxid, Calciumcarbonat, Kaolin, Talkum, Dispersionen in der Keramikherstellung, zur Verhinderung Kalksteinablagerung, als Additive für Reinigungsmittel, als Sequestrierungsmittel in der Textil-, Papierund Lederindustrie und als Kalksteinverhinderer für Industriewässer und in der Abwasseraufbereitung.

Die erfindungsgemäßen Polycarboxylatether eignen als Plastifizier und Fliessmittel für hydraulische Zementsysteme, wie beispielsweise Portlandzement, Kalkmergel, Beton, Estrichmörtel, Gipssuspensionen und Gipsanhydritbindemittelformulierungen, für keramische Massen aus Tonen, Kalinen, Feldspäten und Quarzgestein, Calciumstearat und die in Wasser schwerlöslichen Fettsäuresalze weiterer zwei- und mehrwertiger Kationen.

Die erfindungsgemäßen Polycarboxylatether eignen sich weiterhin als Dispergier und Deflokkulierungsmittel für anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet. Die mit Hilfe der erfindungsgemäßen Polycarboxylatether hergestellten Pigmentdipsersionen lassen sich als Abtönpasten, Pigmentslurries, -dispersionen oder -präparationen in der Farben- und Lackindustrie, in der Keramikindustrie und u. a. in der Textil- und Lederindustrie einsetzten.

Eine besondere Verwendung finden die erfindungsgemäßen Polycarboxylatether als Dispergiermittel für transparente Eisenoxidpigmente, mit denen sich transparente wässrige oder lösemittelhaltige Lacke für die Holzbeschichtung herstellen lassen.

Die erfindungsgemäßen Polycarboxylatether werden bevorzugt in einer Menge von 0,01 bis 15 Gew.-%, bevorzugt 0,1 bis 5 Gew.-% bezogen auf das Gewicht der anorganischen Pigmente eingesetzt, wozu hydraulische Bindemittel, Gipshydrat (Bauindustrie) und die vorherig beschriebenen Mineralien und anorganischen Pigmente zählen. Insbesondere für das Dispergieren von anorganischen Pigmenten in Farben und Lacken, Pigmentkonzentraten, Slurries und Pigmentpräparationen werden 0,1 - 10 Gew.-% und bevorzugt 0,3 - 5 Gew.-% bezogen auf die anorganischen Pigmente eingesetzt.

Eine besondere Ausführungsform der erfindungsgemäßen Polycarboxylatether ist die Verwendung als Dispergiermittel in wässrigen Dispersionsfarben. Wässrige Dispersionsfarben enthalten verschiedene Weißpigmente, insbesondere Titandioxid, Bariumsulfat und Zinksulfit, Buntpigmente wie oben beschrieben, insbesondere Eisenoxidpigmente, Chromdioxid und Cobaltspinellpigmente, Füllstoffe wie natürliches oder gefälltes Calciumcarbonat, Talkum, Kaolin, Quarzmehl und andere Mineralpigmente. Als Bindemittel für die Weißpigmente und Füllstoffe kommen Emulsionspolymerisate zum Einsatz. Diese Emulsionspolymerisate bestehen üblicherweise aus Polymeren oder Copolymeren von Styrol, Acrylsäureester, Methacrylsäureester, Acrylsäure, Methacrylsäure, Maleinsäurediester, Vinylacetat, Isodekansäurevinylester, Neodecansäurevinylester, Isononansäurevinylester, Vinylchorid, Butadien und anderer olefinisch ungesättigter Monomere. Weitere Bindemittel sind wässrige Alkydharzdispersionen, Polyurethandispersionen, Kaliumwasserglas für Silikatfarben, Silikonharzdispersionen und weitere wässrige Polymerdispersionen.

Üblicherweise werden die erfindungsgemäßen Polycarboxylate der wässrigen Farbe in Einsatzmengen von 0,05 - 5 Gew.-% bezogen auf die anorganischen Pigmente und Füllstoffe zugesetzt und in einer bevorzugt ausgeführten Form in Einsatzmengen von 0,1 - 1 Gew.-% bezogen auf die anorganischen Pigmente und Füllstoffe.

In Industrie- und Abwässern, in der Textil-, Leder- und Papierindustrie sowie in Haushalts- und gewerblichen Reinigern werden Additive zur Kalksteinverhinderung eingesetzt. Die erfindungsgemäßen Polycarboxylatether eignen sich als Dispergier- und Sequestriermittel für in Wasser schwer lösliche Erdalkalicarbonate und -sulfate. Geeignete Einsatzmengen betragen 0,001 - 0,1 Gew.-% Polycarboxlatether in Industriewässern und Abwässer bzw. 0,01 - 2 Gew.% Polycarboxylatether bezogen auf die in der Textil-, Leder- und Papierindustrie oder im Hygienebereicht eingesetzte Anwendungsflotten.

Die erfindungsgemäßen Polycarboxylatether eignen sich insbesondere für die Verwendung in der Vorbehandlung, Bleiche, Entschlichtung, Abkochung, Mercerisiation von Textilen, insbesondere von Textilgewebe aus Baumwolle, Leinen, Wolle und Synthesefasern und deren Mischgewebe, sowie für die Textilfärbung und Hochveredlung. Insbesondere in der Vorbehandlung und Bleiche eignen sich die erfindungsgemäßen Polycarboxylatether zur Verhinderung von Ablagerung auf dem Gewebe und den Maschinenelementen.

Die erfindungsgemäßen Polycarboxylatether eignen sich gleichfalls für die Herstellung von flüssigen Reinigungsformulierungen, die anionischen, nichtionische, amphotere und kationische Tenside enthalten, wobei dem erfindungsgemäßen Polycarboxylatether die Aufgabe zukommt, die Bildung von Kalkstein in der Anwendungsflotte zu verhindern. Beispiele für die Verwendung der erfindungsgemäßen Polycarboxylatether können Fahrzeugpflegemittel, Industriereiniger, Molkereireiniger, Fleischereireiniger, Haushaltsbodenpflegemittel, Geschirrspülmittel, flüssige und pulverförmige Haushaltswaschmittel für Textilien, Sanitärreiniger, Toilettenreiniger und sonstige Reiniger im Haushaltsbereich oder im gewerblichen oder industriellen Bereich sein.

Üblicherweise werden als Kalksteinverhinderer Polymere der Acrylsäure, Copolymere aus Maleinsäure und Acrylsäure oder Chelatbildner wie Aminotriessigsäure, Ethylendiamintetraacetat, Aminotrismethylenphosphonsäure, Diethylentriaminpentamethylenphosphonsäure, 1-Hydroxyethan-1,1-diphosphonsäure und deren Natrium und Kaliumsalze eingesetzt, die aufgrund ihrer ionischen Charaktere wenig mischbar mit tensidischen Substanzen sind. Die erfindungsgemäßen Polycarboxylate dagegen zeigen sich durch eine gute Verträglichkeit mit anionischen, nichtionische, amphotere und kationische Tenside aus und eignen sich daher für die Herstellung flüssiger Reinigungsmittelformulierungen.

Eine weitere Anwendung der erfindungsgemäßen Polycarboxylatether als Dispergiermittel für Schleifmittel, z. B. für Siliciumcarbid kommt das chemischmechanische Schleifen (Chemical mechanical Planarization) von Siliciumwafem infrage.

Weitere Anwendungen der erfindungsgemäßen Polycarboxylatether als Dispergiermittel und Kalksteinverhinderer sind Pflanzenschutzformulierungen, Kühlschmiermittel in der Metallberabeitung, die Abwasseraufbereitung, die Erdölfördung, die Erölspaltung und die Erzaufbereitung.

Gegebenenfalls werden die erfindungsgemäßen Polycarboxylatether in Kombination mit weiteren grenzflächenaktiven Substanzen kombiniert. Ziel dieser Kombination ist eine Verbesserung der Eigenschaften der Anwendungsformulierung. Geeignete grenzflächenaktive Substanzen können beispielsweise Luftporenbildner und Netzmittel in der Bauindustrie und weitere Netz- und Dispergieradditive in der Farben- und Lackindustie und für Pigmentpräparationen, -slurries oder -dispersionen sein.

So enthalten die erfindungsgemäßen Anwendungsformulierungen in bevorzugten Ausführungsformen gegebenenfalls ein oder mehrere nichtionische Tenside aus der Gruppe der Alkylphenolpolyethylenglykolether, styrolsubstituierten Phenolpolyethylenglycolether, Alkylpolyethylenglykolether, Alkylaminethoxylate primärer Alkylamine mit einer Kohlenstoffkettenlänge von 8 bis 22 C-Atomen, Fettsäurepolyethylenglykolether, Fettsäurepolyglycoside, Alkylpolyalkylglycolether von C₈-C₂₂-Alkoholen, die mit Ethylenoxid und Propylenoxid blockweise umgesetzt wurden, endgruppenverschlossenen Alkylethoxylaten von C₈-C₂₂-Alkoholen, die mit Ethylenoxid umgesetzt wurden und mit Methylchlorid, Butylchlorid oder Benzylchlorid verethert wurden, Ethylen/Propylenglykol-Blockpolymere und Sorbitanesterpolyethylenglykolether.

In einer weiteren bevorzugten Ausführungsform enthalten die erfindungsgemäßen Anwendungsformulierungen gegebenenfalls ein oder mehrere anionische Tenside aus der Gruppe der Natrium-, Kalium- und Ammoniumsalze von Fettsäuren, Natriumalkylbenzolsulfonate, Natriumalkylsulfonate, Natriumolefinsulfonate, Natriumpolynaphthalinsulfonate, Natriumligninsulfonat, Natriumdialkyldiphenyletherdisulfonate, Natrium-, Kalium- und Ammoniumalkylsulfate, Natrium-, Kalium- und Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und Monoalkylpolyoxethylsulfosuccinate, sowie Alkylpolyethylenglykoletherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze, Alkylpolyethylenglycolethercarbonsäuren und deren Natrium-, Kalium- und Ammoniumsalze, Schwefelsäurehalbester und Phosphorsäureester von styrolsubstituierten Phenolethoxylaten, styrolsubstituierte Phenolpolyethylenglycolethercarbonsäuren und ihre Natrium-, Kalium- und Ammoniumsalze, Natriumfettsäureisethionate, Natriumfettsäuremethylthauride und Natriumfettsäuresarkoside.

In einer weiteren bevorzugten Ausführungsform enthalten die erfindungsgemäßen Anwendungsformulierungen gegebenenfalls ein oder mehrere Lösemittel, hydrotrope Substanzen, Viskositätsmodifizierer oder Feuchthaltemittel ausgewählt aus der Gruppe der Glykolether, insbesondere Polyethylenglykolether oder Polypropylenglykolether mit einer mittleren Molmasse zwischen 200 und 2000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- oder Propylenglykoleinheiten wie beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20000 g/mol, Pentaerythritolalkoxylate oder weitere Ethoxylierungsund Alkoxylierungsprodukte und statistische oder Blockcopolymere die durch Addition von Ethylenoxid und/oder Propylenoxide an ein- und höherwertige Alkohole hergestellt wurden.

Weitere wasserlösliche organische oder hydrotrope Substanzen, die mit den erfindungsgemäßen Copolymeren kombiniert werden können und die gegebenenfalls auch als Lösungsmittel, Konsistenzgeber oder Rheologieadditive dienen, sind beispielsweise Formamid, Harnstoff, Tetramethylharnstoff, ε-Caprolactam, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat, Gelatinederivate, Cellulosederivate wie beispielsweise Methylcellulose, Hyroxyethylcelluloseether, Methoxyethylcelluloseether, Methoxypropylcelluloseether, Polyvinylpyrrolidon, Polyvinylalkohol, Polyvinylimidazol und Co- und Terpolymere aus Vinylpyrrolidon, Vinylacetat und Vinylimidazol, wobei anschließend die Polymere mit Vinylacetatbausteinen einer Verseifung zum Vinylalkohol unterzogen werden können.

Als weitere übliche Zusatzstoffe kommen Antiabsetzmittel, Lichtschutzmittel, Antioxidantien, Entgaser/Entschäumer, schaumreduzierende Mittel, Füllstoffe, Mahlhilfsmittel, Viskositätsstabilisatoren und Additive, welche die Rheologie günstig beeinflussen, in Betracht. Als Mittel zur Regulierung der Viskosität kommen z. B. Stärke- und Cellulosederivate und hydrophobmodifizierte ethoxylierte Urethane (HEUR)-Verdicker infrage. Als pH-Regulatoren kommen organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak.

### Synthesebeispiele

### Beispiel 1

### Synthese des Macromonomeren (A)

In einem Druckreaktor wird 0,625 mol (90 g) Hydroxypropylmethacrylat und 0,045 g 2,2,6,6-Tetramethylpiperidin-1-oxyl und 0,045 g des in EP-A-1 276 563 beschriebenen DMC Katalysators vorgelegt. Das Gemisch wird unter Stickstoff auf eine Temperatur auf 120 °C aufgeheizt und bei einem Druck von etwa 3 bar eine Menge von 36,3 g Propylenoxid so dosiert, dass die entstehende Reaktionswärme abgeführt werden kann. Nach der Abreaktion des Propylenoxids, erkennbar am Druckabfall, wird 330 g Ethylenoxid erneut so dosiert, dass die entstehende Reaktionswärme abgeführt werden kann. Nach der Abreaktion, erkennbar am Druckabfall auf den Ausgangsdruck, wird das Produkt mittels OH-Zahl-Titration, NMR-Spektroskopie und GPC-Molmassenbestimmung analysiert.

| OH-Zahl in mg KOH/g nach DIN 53240 | Berechnete Molmasse Mn aus OH- Zahl in g/mol | NMR Molverhältnis aus ¹H NMR Signalen Doppelbindung-Methacryl : PO : EO : CH₂OH | GPC Charakterisierung (lipophile GPC in THF mit PEG Eichung |
|---|---|---|---|
| 74,3 | 755 | 1 : 2,1 : 12,3 : 1,03 | ein Hauptpeak > 92 % mit Maximum bei 720 g/mol |

Es ist damit ein Methacrylsäureester-(PO)₂(EO)₁₂-OH Blockcopolymer entstanden.

### Beispiel 2

### Synthese des Macromonomeren (A)

In einem Druckreaktor wird 0,625 mol (90 g) Hydroxypropylmethacrylat und 0,045 g 2,2,6,6-Tetramethylpiperidin-1-oxyl und 0,045 g des in EP-A-1 276 563 beschriebenen DMC-Katalysators vorgelegt. Das Gemisch wird unter Stickstoff auf eine Temperatur auf 110 °C aufgeheizt und bei einem Druck von etwa 3 bar eine Menge von 36,3 g Propylenoxid so dosiert, dass die entstehende Reaktionswärme abgeführt werden konnte. Nach der Abreaktion des Propylenoxids, erkennbar am Druckabfall, wird 1100 g Ethylenoxid erneut so dosiert, dass die entstehende Reaktionswärme abgeführt werden kann. Nach der Abreaktion, erkennbar am Druckabfall auf den Ausgangsdruck, wird das Produkt mittels OH-Zahl-Titration, NMR-Spektroskopie und GPC- Molmassenbestimmung analysiert.

| OH-Zahl in mg KOH/g nach DIN 53240 | Berechnete Molmasse Mn aus OH-Zahl in g/mol | NMR Molverhältnis aus ¹H NMR Signalen Doppelbindung-Methacryl : PO : EO : CH₂OH | GPC Charakterisierung (lipophile GPC in THF mit PEG Eichstandards |
|---|---|---|---|
| 28,8 | 1947 | 1 : 2,1 : 40 : 1,15 | ein Hauptpeak > 90 % mit Maximum bei ca. 1700 g/mol |

Es ist damit ein Methacrylsäureester-(PO)₂(EO)₄₀-OH Blockcopolymer entstanden.

### Beispiel 3

### Synthese des Polycarboxylatethers

In einem Glaskolben werden das Macromonomer (A) aus Beispiel 1 (360 g), Methacrylsäure (40 g), Monoallylpolyethylenglykol (Molmasse = 250 g/mol) (22,3 g) und 1-Dodecylthiol (17,1 g) in 400 g Isopropanol unter Stickstoff vorgelegt. Dann wird unter Rühren auf eine Temperatur von 80 °C aufgeheizt. Nach Erreichen der Reaktionstemperatur wird der Initiator AMBN (9,15 g gelöst in 36,6 g Isopropanol) innerhalb 1 Stunde zudosiert. Anschließend wird noch weitere 5 Stunden bei dieser Temperatur gerührt. Nach dem Abkühlen auf Raumtemperatur wird das Lösungsmittel im Vakuum entfernt.

### Beispiel 4

### Synthese des Polycarboxylatethers

In einem Glaskolben werden das Macromonomer (A) aus Beispiel 2 (50 Gew.% in Wasser, 432,6 g), Methacrylsäure (11,4 g), Natriummethallylsulfonat (22,4 g) und 2-Mercaptopropionsäure (1,6 g) in Wasser (198,3 g) unter Stickstoff vorgelegt. Dann wird die Reaktionsmischung auf 75 °C erhitzt und Natriumpersulfat (6,35 Gew.-% in Wasser, 34,4 g) zudosiert. Nach vollständiger Zugabe wird noch für eine Stunde bei 75 °C gerührt. Danach wird auf Raumtemperatur abgekühlt und der pH-Wert mit Natronlauge (50 Gew.-% in Wasser) auf 5,5 eingestellt.

### Beispiel 5

### Synthese des Polycarboxylatethers

In einem Glaskolben wird das Macromonomer (A) aus Beispiel 2 (50 Gew.-% in Wasser, 432,6 g), Methacrylsäure (54,1 g), Natriummethallylsulfonat (22,4 g) und 2-Mercaptopropionsäure (1,6 g) in Wasser (198,3 g) unter Stickstoff vorgelegt. Dann wird die Reaktionsmischung auf 75 °C erhitzt und Natriumpersulfat (6,35 Gew.-% in Wasser, 34,4 g) zudosiert. Nach vollständiger Zugabe wird noch für eine Stunde bei 75 °C gerührt. Danach wird auf Raumtemperatur abgekühlt und der pH-Wert mit Natronlauge (50 Gew.% in Wasser) auf 6 eingestellt.

### Beispiel 6

### Vergleichsbeispiel - Synthese eines Polycarboxylatethers mit Bisomer PEM 6LD

### (Polyethylenglykolmonomethacrylat, 6 EO-Einheiten, Hersteller: Cognis)

In einem Glaskolben werden Bisomer PEM 6LD (360 g), Methacrylsäure (40 g) und 1-Dodecanthiol (15,11 g) in 400 g Isopropanol unter Stickstoff vorgelegt. Dann wird unter Rühren auf eine Temperatur von 80 °C aufgeheizt. Nach Erreichen der Reaktionstemperatur wird der Initiator AMBN (14,33 g gelöst in 57,32 g Isopropanol) innerhalb 1 Stunde zudosiert. Schon kurze Zeit nach vollendeter Initiatorzugabe bildet sich ein zähes Gel, was auf starke Vernetzung des Polymers hindeutet.

### Beispiel 7

### Vergleichsbeispiel - Synthese eines Polycarboxylatethers mit Bisomer PEM 6LD

### (Polyethylenglykolmonomethacrylat, 6 EO-Einheiten, Hersteller: Cognis)

In einem Glaskolben werden Bisomer PEM 6LD (392 g), Methacrylsäure (8 g) und 1-Dodecanthiol (12,27 g) in 400 g Isopropanol unter Stickstoff vorgelegt. Dann wird unter Rühren auf eine Temperatur von 80 °C aufgeheizt. Nach Erreichen der Reaktionstemperatur wird der Initiator AMBN (11,64 g gelöst in 46,6 g Isopropanol) innerhalb 1 Stunde zudosiert. Schon kurze Zeit nach vollendeter Initiatorzugabe bildet sich ein zähes Gel, was auf starke Vernetzung des Polymers hindeutet.

### Anwendungsbeispiele

In den folgenden Beispielen stehen Prozentangaben für Gewichtsprozente, sofern nicht anders angegeben.

### Anwendungsbeispiel 1

### Herstellung einer Titandioxid-Dispersion

0,5 g der wässrigen Lösung des Polycarboxylatethers aus Beispiel 4 werden in 49,5 g vollentsalztem Wasser vorgelöst und darin anschließend 150 g Titandioxid (Hombitan^{®} Titandioxid R 210, Sachtlegen Chemie GmbH) mit einer Dissolverzahnradscheibe dispergiert. Die entstehende Pigmentsuspension hat eine Brookfield-Viskosität von 440 mPa·s (Spindel 4,100 UpM).

### Anwendungsbeispiel 2

### Herstellung einer Cacliumcarbonat-Dispersion

0,5 g der wässrigen Lösung des Polycarboxylatethers aus Beispiel 4 werden in 49,5 g vollentsalztem Wasser vorgelöst und darin anschließend 150 g Calciumcarbonat (Omyacarb^{®} 2 GU, Omya AG) mit einer

Dissolverzahnradscheibe dispergiert. Die entstehende Pigmentsuspension hat eine Brookfield-Viskosität von 240 mPa·s (Spindel 4,100 UpM).

### Anwendungsbeispiel 3

### Herstellung einer Dispersionsfarbe

124 g vollentsalztes Wasser werden vorgelegt und 2 g Verdickter auf Basis Methoxyethylcelluloseether (Tylose^{®} MH 10000 YP2, SE Tylose GmbH), 5 g der erfindungsgemäßen, wässrigen Lösung des Polycarboxylatethers aus Beispiel 5, 2 g Netzmittel (Genapol^{®} ED 3060, Clariant International AG) und 2 g Antischaumund Entlüftungsmittel (Antimussol^{®} W-06, Clariant International AG) darin unter Rühren gelöst. Anschließend werden in Pulverform 220 g Titandioxid (Titandioxid Kronos^{®} 2169, Kronos Titan GmbH), 170 g Calciumcarbonat (Omyacarb^{®} 5 GU, Omya AG), 40 g Talkum (Plastorit^{®} 00 Micro Talkum AT 1, Luzenac Naintsch) und 20 g Kaolin (White Grown Clay, Omya AG) zur Dispergierflotte zugegeben und mittels einer Zahnkranzscheibe bei 3000 Umdrehungen pro Minute dispergiert. Anschließend werden 2 g 25 %ige wässrige Ammoniaklösung (Pufferlösung), 12 g Butyldiglykol (Koaleszenzmittel), 375 g Reinacrylat-Polymerdisperion (Mowilith^{®} LDM 7714, Celanese Emulsions GmbH), 2 g Biozidlösung (Nipacide^{®} BIT 10, Clariant International AG) und 4 g Hydrophobmodifizierter ethoxylierter Urethanverdicker (Tafigel^{®} PUR 40, Münzing GmbH) zugegeben und bei niedrigen Umdehungszahlen von 500 Umdrehungen pro Minute mit der Zahnkranzscheibe homogenisiert. Die resultierende Dispersionsfarbe ist zeigt eine Viskosität von ca. 110 Pa·s, ist nach Lagerung bei 60 °C für eine Woche stabil und gut streichbar.

### Anwendungsbeispiel 4

Herstellung einer Pigmentpräparation mit Eisenoxidrot
- 70 Teile: C.l. Pigment Red 101 (Bayferrox^{®} 130, Lanxess AG, Komponente A)
- 7 Teile: Wässrige Lösung des Polycarboxylatethers aus Beispiel 3 (Komponente B, Dispergiermittel)
- 10 Teile: Feuchthaltemittel (Polyglykol 300, Clariant International AG, Komponente C, Dispergiermittel)
- 0,2 Teile: Konservierungsmittel (Nipacide^{®} BIT 10, Clariant International AG, Komponente D)
- 0,5 Teile: Entschäumer (Antimussol^{®} W-06, Clariant International AG, Komponente E)
- 12,3 Teile: Vollentsalztes Wasser (Komponente F)

In einem Mahlbehälter werden die Komponenten (B), (C), (D), (E) und (F) vorgelegt und vermischt. Anschließend wird die pulverförmige Komponente (A) zugegeben und mit dem Dissolver vordispergiert. Die Feindispergierung erfolgt in einer Perlmühle mittels Zirkonmischoxidperlen der Größe d = 1 mm unter Kühlung. Anschließend werden die Mahlkörper abgetrennt und die Pigmentpräparation isoliert. Die Pigmentpräparation wird eine Woche bei 60 °C gelagert und visuell beurteilt. Die Viskosität der Pigmentpräparation wird mit einem Brookfield Digital Viscometer Model DV-II bei 100 Umdrehungen pro Minute mit der Spindel 4 gemessen.

Die Pigmentpräparation ist nach einwöchiger Lagerung bei 60 °C flüssig, homogen und schaumfrei. Die Viskosität der Pigmentpräparation beträgt 2400 mPa·s.

### Anwendungsbeispiel 5

Herstellung einer Pigmentpräparation mit Eisenoxidschwarz
- 65 Teile: C.l. Pigment Black 11 (Bayferrox^{®} 316, Lanxess AG, Komponente A)
- 7 Teile: Wässrige Lösung des Polycarboxylatethers aus Beispiel 3 (Komponente B, Dispergiermittel)
- 10 Teile: Feuchthaltemittel (Polyglykol 300, Clariant International AG, Komponente C)
- 0,2 Teile: Konservierungsmittel (Nipacide^{®} BIT 10, Clariant International AG, Komponente D)
- 0,5 Teile: Entschäumer (Antimussol^{®} W-06, Clariant International AG, Komponente E)
- 12,3 Teile: Vollentsalztes Wasser (Komponente F)

Die Pigmentpräparation wird wie in Anwendungsbeispiel 4 beschrieben hergestellt und ausgeprüft. Nach einwöchiger Lagerung bei 60 °C ist die Pigmentpräparation flüssig, homogen und schaumfrei. Die Viskosität der Pigmentpräparation beträgt 3400 mPa·s.

### Anwendungsbeispiel 6

Herstellung einer Pigmentpräparation mit transparentem Eisenoxidrotpigment
- 30 Teile: C.I. Pigment Red 101 (Sicotrans^{®} Red L 2715 D, BASF AG, Komponente A)
- 6 Teile: Wässrige Lösung des Polycarboxylatethers aus Beispiel 3 (Komponente B, Dispergiermittel)
- 10 Teile: Feuchthaltemittel (Polyglykol 300, Clariant International AG, Komponente C)
- 0,2 Teile: Konservierungsmittel (Nipacide^{®} BIT 10, Clariant International AG, Komponente D)
- 0,5 Teile: Entschäumer (Antimussol^{®} W-06, Clariant International AG, Komponente E)
- 53,3 Teile: Vollentsalztes Wasser (Komponente F)

Die Pigmentpräparation wird wie in Anwendungsbeispiel 4 beschrieben hergestellt und ausgeprüft. Nach einwöchiger Lagerung bei 60 °C ist die Pigmentpräparation flüssig, homogen und schaumfrei. Die Viskosität der Pigmentpräparation beträgt 80 mPa·s.

### Anwendungsbeispiel 7

Herstellung einer Pigmentpräparation mit transparentem Eisenoxidgelbpigment
- 30 Teile: C.I. Pigment Yellow 42 (Sicotrans^{®} Yellow L1918, BASF AG, Komponente A)
- 6 Teile: Wässrige Lösung des Polycarboxylatethers aus Beispiel 3 (Komponente B, Dispergiermittel)
- 10 Teile: Feuchthaltemittel (Polyglykol 300, Clariant International AG, Komponente C)
- 0,2 Teile: Konservierungsmittel (Nipacide^{®} BIT 10, Clariant International AG, Komponente D)
- 0,5 Teile: Entschäumer (Antimussol^{®} W-06, Clariant International AG, Komponente E)
- 53,3 Teile: Vollentsalztes Wasser (Komponente F)

Die Pigmentpräparation wird wie in Anwendungsbeispiel 4 beschrieben hergestellt und ausgeprüft. Nach einwöchiger Lagerung bei 60 °C ist die Pigmentpräparation flüssig, homogen und schaumfrei. Die Viskosität der Pigmentpräparation beträgt 110 mPa·s.

### Anwendungsbeispiel 8

### Herstellung eines Zementmörtels

900 g Portlandzement werden mit 2700 g Normensand (Grobanteil:Feinanteil = 2:1) und 450 g Wasser, welches den erfindungsgemäßen Polycarboxylatether in vorgelöster Form enthält, normgerecht angerührt. Bei einem Einsatz von 0,25 % Polycarboxylatether aus Beispiel 5 bezogen auf den Portlandzement (2,25 g Wirksubstanz) ist der Zementmörtel auch nach 90 Minuten noch fließfähig. Der Zementmörtel ohne Polycarboxylatether schon sofort nach der Herstellung steif und nicht fließfähig.

### Neue Beispiele:

### Anwendungsbeispiel 9

Herstellen eines Universalreinigers 10 g der wässrige Lösung des Polycarboxylatethers aus Beispiel 3, 10 g Isotridecylpolyethylenglykolether mit 8 Mol Ethylenoxid (Genapol^{®} X 080, Clariant International AG), 20 g Mono/diphosphorsäureester eines Alkylpolyethylenglykolether mit 6 Mol Ethylenoxid (Hostaphat^{®} 1306, Clariant International AG), 2 g einer 25 %igen wässrigen Ammoniak-Lösung und 168 g vollentsalztes Wasser werden in einem Becherglas gemischt. Die Lösung hat einen pH-Wert von ca. 5, ist bei Raumtemperatur stabil und flüssig und eignet sich als Universalreiniger für harte Oberflächen.

### Anwendungsbeispiel 10

Herstellung einer Pigmentpräparation mit transparentem Eisenoxidgelbpigment
- 50 Teile: C.I. Pigment Yellow 42 (Sicotrans^{®} Yellow L1918, BASF AG, Komponente A)
- 8 Teile: Wässrige Lösung des Polycarboxylatethers aus Beispiel 3 (Komponente B, Dispergiermittel)
- 10 Teile: Feuchthaltemittel (Polyglykol 300, Clariant International AG, Komponente C)
- 0,2 Teile: Konservierungsmittel (Nipacide^{®} BIT 10, Clariant International AG, Komponente D)
- 0,5 Teile: Entschäumer (Antimussol^{®} W-06, Clariant International AG, Komponente E)
- 31,3 Teile: Vollentsalztes Wasser (Komponente F)

Die Pigmentpräparation wird wie in Anwendungsbeispiel 4 beschrieben hergestellt und ausgeprüft. Nach einwöchiger Lagerung bei 60 °C ist die Pigmentpräparation flüssig, homogen und schaumfrei. Die Viskosität der Pigmentpräparation beträgt 240 mPa·s.

### Anwendungsbeispiel 11

Herstellung einer Pigmentpräparation mit transparentem Eisenoxidrotpigment
- 50 Teile: C.I. Pigment Red 101 (Sicotrans^{®} Red L 2715 D, BASF AG, Komponente A)
- 8 Teile: Wässrige Lösung des Polycarboxylatethers aus Beispiel 3 (Komponente B, Dispergiermittel)
- 10 Teile: Feuchthaltemittel (Polyglykol 300, Clariant International AG, Komponente C)
- 0,2 Teile: Konservierungsmittel (Nipacide^{®} BIT 10, Clariant International AG, Komponente D)
- 0,5 Teile: Entschäumer (Antimussol^{®} W-06, Clariant International AG, Komponente E)
- 31,3 Teile: Vollentsalztes Wasser (Komponente F)

Die Pigmentpräparation wird wie in Anwendungsbeispiel 4 beschrieben hergestellt und ausgeprüft. Nach einwöchiger Lagerung bei 60 °C ist die Pigmentpräparation flüssig, homogen und schaumfrei. Die Viskosität der Pigmentpräparation beträgt 2500 mPa·s.

## Patentansprüche

1. Verwendung von mit DMC - Katalysatoren hergestellten Macromonomeren für die Herstellung von Polycarboxylatethern, erhältlich durch Polymerisation der Monomere (A), (B) und (C), wobei
(A) ein Monomer der Formel (I) 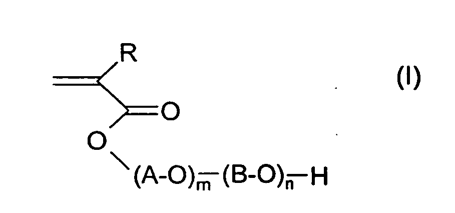 worin
A für C₂- bis C₄-Alkylen,
B für ein von A verschiedenes C₂- bis C₄-Alkylen,
R für Wasserstoff oder Methyl,
m für eine Zahl von 1 bis 500,
n für eine Zahl von 1 bis 500 stehen,
(B) ein ethylenisch ungesättigtes Monomer ist, das mindestens eine Carbonsäurefunktion enthält,
(C) ein weiteres, von (A) und (B) verschiedenes, wasserlösliches, ethylenisch ungesättigtes Monomer ist.

2. Verwendung nach Anspruch 1, worin der Gewichtsanteil des Monomeren (A) von 35 bis 99 % beträgt.

3. Verwendung nach Anspruch 1 und/oder 2, worin der Gewichtsanteil des Monomeren (B) von 0,5 bis 45 % beträgt.

4. Verwendung nach einem oder mehreren der Ansprüche 1 bis 3, worin der Gewichtsanteil des Monomeren (C) von 0,5 bis 20 % beträgt.

5. Verwendung nach einem oder mehreren der Ansprüche 1 bis 4, wobei die Verbindung der Formel 1 Etylenoxid- und Propylenoxideinheiten enthält, und der molare Anteil der Ethylenoxid-Einheiten 50 bis 99 % bezogen auf die Summe (100 %) der Ethylenoxid- und Propylenoxid-Einheiten, beträgt.

6. Verwendung nach einem oder mehreren der Ansprüche 1 bis 5, wobei m eine Zahl von 1 bis 150 ist.

7. Verwendung nach einem oder mehreren der Ansprüche 1 bis 6, wobei n eine Zahl von 3 bis 300 ist.

8. Verwendung nach einem oder mehreren der Ansprüche 1 bis 7, wobei die Summe der Alkylenoxideinheiten n + m zwischen 2 und 500 liegt.

9. Verwendung nach einem oder mehreren der Ansprüche 1 bis 8, wobei die Macromonomeren (A) durch Umsetzung von konjugierten ungesättigten Säuren oder reaktiven Derivaten wie konjugierten ungesättigten Hydroxyalkylestem mit Alkylenoxiden in Gegenwart von Katalysatoren der Formel Zn₃[Co(CN)₆]₂•xZnCl₂•yH₂O•z·Glyme mit x = 0,2 bis 3, y = 1 bis 10 und z = 0,5 bis 10 hergestellt sind.

10. Verwendung nach einem oder mehreren der Ansprüche 1 bis 9, wobei die Monomeren (B) aus monoethylenisch ungesättigten Mono- und Dicarbonsäuren mit 3 bis 8 C-Atomen ausgewählt sind.

11. Verwendung nach einem oder mehreren der Ansprüche 1 bis 10, wobei die Monomeren (C) aus der Gruppe bestehend aus monoethylenisch ungesättigten Sulfonsäuren und deren Salzen, Phosphonsäuren und deren Salzen und Monoallylpolyalkylenglykolen ausgewählt sind.

12. Verwendung nach einem oder mehreren der Ansprüche 1 bis 11, wobei die erfindungsgemäßen Polycarboxylatether ein Molekulargewicht von 10³ g/mol bis 10⁹ g/mol besitzen.

13. Polycarboxylatether, enthaltend Struktureinheiten der Macromonomere (A), (B) und (C), wobei
(A) ein Monomer der Formel (I) ist 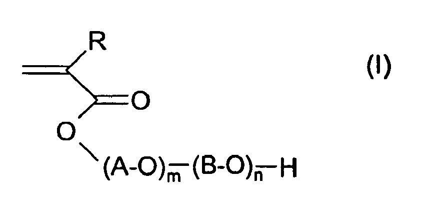 worin
A für C₂- bis C₄-Alkylen,
B für ein von A verschiedenes C₂- bis C₄-Alkylen,
R für Wasserstoff oder Methyl,
m für eine Zahl von 1 bis 500,
n für eine Zahl von 1 bis 500 stehen,
und (A) mit Hilfe von DMC - Katalysatoren hergestellt ist,
(B) ein ethylenisch ungesättigtes Monomer ist, das mindestens eine Carbonsäurefunktion enthält,
(C) ein weiteres, von (A) und (B) verschiedenes ethylenisch ungesättigtes Monomer ist.

## Claims

1. The use of macromonomers, prepared using DMC catalysts, for the preparation of polycarboxylate ethers obtainable by polymerization of the monomers (A), (B) and (C),
(A) a monomer of the formula (I) 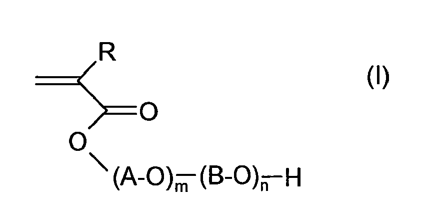 in which
A is C₂- to C₄-alkylene,
B is a C₂- to C₄-alkylene differing from A,
R is hydrogen or methyl,
m is a number from 1 to 500,
n is a number from 1 to 500,
(B) being an ethylenically unsaturated monomer which contains at least one carboxyl function,
(C) being a further, water-soluble, ethylenically unsaturated monomer differing from (A) and (B).

2. The use as claimed in claim 1, wherein the proportion by weight of the monomer (A) is from 35 to 99%.

3. The use as claimed in claim 1 and/or 2, wherein the proportion by weight of the monomer (B) is from 0.5 to 45%.

4. The use as claimed in one or more of claims 1 to 3, wherein the proportion by weight of the monomer (C) is from 0.5 to 20%.

5. The use as claimed in one or more of claims 1 to 4, the compound of the formula I containing ethylene oxide and propylene oxide units, and the molar proportion of the ethylene oxide units being from 50 to 99%, based on the sum (100%) of the ethylene oxide and propylene oxide units.

6. The use as claimed in one or more of claims 1 to 5, m being a number from 1 to 150.

7. The use as claimed in one or more of claims 1 to 6, n being a number from 3 to 300.

8. The use as claimed in one or more of claims 1 to 7, the sum of the alkylene oxide units n + m being from 2 and 500.

9. The use as claimed in one or more of claims 1 to 8, the macromonomers (A) being prepared by reaction of conjugated unsaturated acids or reactive derivatives, such as conjugated unsaturated hydroxyalkyl esters, with alkylene oxides in the presence of catalysts of the formula Zn₃[Co(CN)₆]₂•xZnCl₂•yH₂O•z glyme, where x = 0.2 to 3, y = 1 to 10 and z = 0.5 to 10.

10. The use claimed in one or more of claims 1 to 9, the monomers (B) being selected from monoethylenically unsaturated mono- and dicarboxylic acids having 3 to 8 carbon atoms.

11. The use as claimed in one or more of claims 1 to 10, the monomers (C) being selected from the group consisting of monoethylenically unsaturated sulfonic acids and salts thereof, phosphonic acids and salts thereof and monoallylpolyalkylene glycols.

12. The use as claimed in one or more of claims 1 to 11, the polycarboxylate ethers according to the invention having a molecular weight of from 10³ g/mol to 10⁹ g/mol.

13. A polycarboxylate ether containing structural units of the macromonomers (A), (B) and (C),
(A) being a monomer of the formula (I) 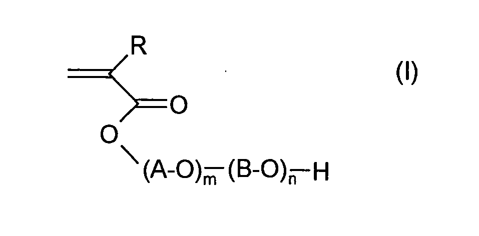 in which
A is C₂- to C₄-alkylene,
B is a C₂- to C₄-alkylene differing from A,
R is hydrogen or methyl,
m is a number from 1 to 500,
n is a number from 1 to 500,
and (A) being prepared with the aid of DMC catalysts,
(B) being an ethylenically unsaturated monomer which contains at least one carboxyl function,
(C) being a further, ethylenically unsaturated monomer differing from (A) and (B).

## Revendications

1. Utilisation de macromonomères préparés avec des catalyseurs DMC pour la préparation de polycarboxylate-éthers, pouvant être obtenus par polymérisation des monomères (A), (B) et (C), où
(A) est un monomère de formule (I) 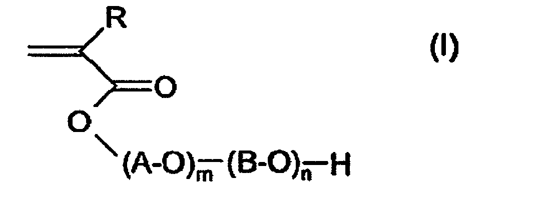 où
A représente C₂-C₄-alkylène
B représente un C₂-C₄-alkylène différent de A,
R représente hydrogène ou méthyle,
m vaut un nombre de 1 à 500,
n vaut un nombre de 1 à 500,
(B) est un monomère éthyléniquement insaturé, qui contient au moins une fonction acide carboxylique,
(C) est un autre monomère éthyléniquement insaturé, différent de (A) et (B), soluble dans l'eau.

2. Utilisation selon la revendication 1, où la proportion pondérale du monomère (A) vaut 35 à 99%.

3. Utilisation selon la revendication 1 et/ou 2, où la proportion pondérale du monomère (B) vaut 0,5 à 45%.

4. Utilisation selon l'une ou plusieurs des revendications 1 à 3, où la proportion pondérale du monomère (C) vaut 0,5 à 20%.

5. Utilisation selon l'une ou plusieurs des revendications 1 à 4, où le composé de formule I contient des unités d'oxyde d'éthylène et d'oxyde de propylène et la proportion molaire des unités d'oxyde d'éthylène représente 50 à 99% par rapport à la somme (100%) des unités d'oxyde d'éthylène et d'oxyde de propylène.

6. Utilisation selon l'une ou plusieurs des revendications 1 à 5, où m vaut un nombre de 1 à 150.

7. Utilisation selon l'une ou plusieurs des revendications 1 à 6, où n vaut un nombre de 3 à 300.

8. Utilisation selon l'une ou plusieurs des revendications 1 à 7, où la somme des unités d'oxyde d'alkylène n + m est située entre 2 et 500.

9. Utilisation selon l'une ou plusieurs des revendications 1 à 8, où les macromonomères (A) sont préparés par transformation d'acides insaturés conjugués ou de dérivés réactifs de ceux-ci tels que des esters hydroxyalkyliques insaturés conjugués avec des oxydes d'alkylène en présence de catalyseurs de formule Zn₃[Co(CN)₆]₂ * xZnCl₂ * yH₂O * z.Glyme avec x = 0,2 à 3, y = 1 à 10 et z = 0,5 à 10.

10. Utilisation selon l'une ou plusieurs des revendications 1 à 9, où les monomères (B) sont choisis parmi les acides monocarboxyliques et dicarboxyliques éthyléniquement monoinsaturés comprenant 3 à 8 atomes de carbone.

11. Utilisation selon l'une ou plusieurs des revendications 1 à 10, où les monomères (C) sont choisis dans le groupe constitué par les acides sulfoniques éthyléniquement monoinsaturés et leurs sels, les acides phosphoniques et leurs sels et les monoallylpolyalkylèneglycols.

12. Utilisation selon l'une ou plusieurs des revendications 1 à 11, où les polycarboxylate-éthers selon l'invention présentent un poids moléculaire de 10³ g/mole à 10⁹ g/mole.

13. Polycarboxylate-éthers, contenant des unités de structure des macromonomères (A), (B) et (C), où
(A) est un monomère de formule (I) 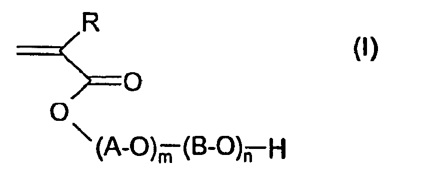 où
A représente C₂-C₄-alkylène
B représente un C₂-C₄-alkylène différent de A,
R représente hydrogène ou méthyle,
m vaut un nombre de 1 à 500,
n vaut un nombre de 1 à 500,
et (A) est préparé à l'aide de catalyseurs DMC,
(B) est un monomère éthyléniquement insaturé, qui contient au moins une fonction acide carboxylique,
(C) est un autre monomère éthyléniquement insaturé, différent de (A) et (B).
